# EUROPÄISCHE PATENTSCHRIFT

(11) **EP 2 199 639 B1**
(45) Veröffentlichungstag und Bekanntmachung des Hinweises auf die Patenterteilung: **28.11.2012**
(21) Anmeldenummer: 09015358.6
(22) Anmeldetag: 11.12.2009
(51) Int. Cl.: F16D 65/00, F16J 3/04

(54) **Scheibenbremse für ein Nutzfahrzeug**
Disc brake for a commercial vehicle
Frein à disque pour un véhicule utilitaire

(30) Priorität: 19.12.2008 DE 102008063890
(43) Veröffentlichungstag der Anmeldung: 23.06.2010
(73) Patentinhaber: KNORR-BREMSE Systeme für Nutzfahrzeuge GmbH, 80809 München (DE)
(72) Erfinder: Beck, Thomas, 94034 Passau (DE); Asen, Alexander, 94474 Vilshofen (DE)
(74) Vertreter: Mattusch, Gundula

(56) Entgegenhaltungen:
- DE-A1- 3 814 695
- DE-A1- 19 511 287
- DE-C1- 19 515 063
- US-A- 3 021 148

## Beschreibung

Die Erfindung betrifft eine Scheibenbremse für ein Nutzfahrzeug gemäß dem Oberbegriff des Anspruchs 1.

Eine gattungsgemäße Scheibenbremse ist aus der DE 195 15 063 C1 bekannt. Bei dieser Konstruktion sind die Druckstücke als separate Bauteile mit den zugeordneten Stellspindeln verbunden, beispielsweise verschraubt.

Der jeder Stellspindel zugeordnete Faltenbalg dient der Abdichtung des Austrittsbereichs der Stellspindel, so dass diese vor Verschmutzung und Witterungseinflüssen geschützt ist.

Dabei wird der Faltenbalg in dem durch den größten Außendurchmesser definierten Endbereich beispielsweise in eine Verschlussplatte eingepresst, die von den Stellspindeln durchtreten wird und durch die ein Aufnahmeraum des Bremssattels, in dem Funktionsteile, wie eine Zuspanneinrichtung oder dergleichen angeordnet sind, verschlossen ist. Im Fall einer einstückigen Ausbildung des Bremssattels, also bei Verzicht auf die Verschlussplatte, ist der Faltenbalg direkt am Bremssattel ebenfalls durch Einpressen befestigt, d.h., der Faltenbalg wird in jedem Fall bremssattelseitig durch Reibschluss gehalten, während er druckstückseitig durch Verprägungen dauerhaft fixiert ist.

Zur Herstellung des Reibschlusses sind jedoch besondere Bedingungen erforderlich, insbesondere hinsichtlich notwendiger enger Toleranzen sowie hinsichtlich der Oberflächenbeschaffenheit der miteinander korrespondierenden Teile.

Diese notwendigen Voraussetzungen erfordern jedoch einen erheblichen fertigungstechnischen Aufwand, ohne jedoch eine Gewähr dafür bieten zu können, dass der Reibschluss dauerhaft wirksam ist.

Wie die Praxis gezeigt hat, kann es zu einer betriebsbedingten Relativverschiebung des Faltenbalges zum Bremssattel bzw. der Verschlussplatte kommen, mit der Folge, dass die gewünschte Dichtwirkung nicht mehr garantiert ist, so dass eine Beschädigung der im Aufnahmeraum positionierten Funktionsteile durch Korrosion oder Verschmutzung möglich ist.

Neben diesem funktionalen Nachteil stellen sich auch die genannten Toleranzanforderungen bzw. Anforderungen an die Oberflächengüte der einander kontaktierenden Bereiche als nur mit erheblichem Fertigungsaufwand zu realisieren dar, der hinsichtlich einer angestrebten optimierten Fertigung kontraproduktiv ist.

In der DE 195 11 287 A1 ist eine Scheibenbremse geoffenbart, bei der der Austrittsbereich der Stellspindel aus dem Bremssattel durch einen Faltenbalg verschlossen ist, der einerseits an der Stellspindel und andererseits formschlüssig an einem Haltering befestigt ist. Hierzu weist der Haltering eine radial nach innen offene Nut auf, in der ein Wulst des Faltenbalgs einliegt.

Aus der DE 38 14 695 A1 ist eine Manschettendichtung aus elastomerem Material bekannt, die einen umfänglichen Wulst aufweist, in den eine wendelförmig verlaufende Drahtfeder eingebettet ist, wobei dieser Wulst in eine Nut eingreifen kann.

Der Erfindung liegt die Aufgabe zugrunde, eine Scheibenbremse der gattungsgemäßen Art so weiterzuentwickeln, dass ein sicherer Halt des Faltenbalges dauerhaft gewährleistet ist und die Herstellungskosten gesenkt werden.

Diese Aufgabe wird durch eine Scheibenbremse mit den Merkmalen des Anspruchs 1 gelöst.

Eine in diesem Sinne ausgebildete Scheibenbremse bietet gegenüber einer solchen nach dem Stand der Technik erhebliche Vorteile. So ist zunächst zu erwähnen, dass der Faltenbalg dauerhaft sicher bremssattelseitig gehalten wird. Eine Relativbewegung zwischen dem Bremssattel bzw. der Verschlussplatte und dem Faltenbalg ist ausgeschlossen und damit eine quasi über die Lebensdauer des Faltenbalges sich erstreckende uneingeschränkte Dichtfunktion gewährleistet.

Dies führt dazu, dass die Standzeit der Scheibenbremse insgesamt erhöht wird, da die im Aufnahmeraum liegenden und durch den Faltenbalg vor Außeneinflüssen zu schützenden Funktionsteile nicht durch Witterungs- und Schmutzeinflüsse beeinträchtigt werden.

Naturgemäß trägt dies in betriebswirtschaftlicher Hinsicht zu einer Optimierung der Scheibenbremse bei, durch die letztendlich die Betriebskosten des Nutzfahrzeuges positiv beeinflusst werden. Vor allem deshalb, weil sich durch die genannten Außeneinflüsse ergebende Reparatur- bzw. Ersatzarbeiten, einschließlich der sich aus den Stillstandszeiten ergebenden Kosten in bemerkenswerter Weise reduziert werden.

Gemäß der Erfindung ist vorgesehen, dass eine Aufnahme des Bremssattels oder der Verschlussplatte, in die der Faltenbalg eingesetzt ist, eine umlaufende Nut aufweist, in der eine im weitesten Sinne als Feder zu bezeichnende Ausformung einliegt.

Dabei ist diese Feder nicht nur im Sinne einer Nut/Feder-Verbindung ausgestaltet, sondern mit federnden Schenkeln versehen, so dass der Faltenbalg mit seinem diesbezüglichen Endbereich unter Federspannung in der Nut einliegt.

Diese Federschenkel, die sich in axialer Richtung erstrecken, sind Bestandteil eines Metallringes, der in ein Dichtmaterial eingebettet ist, das diesen Metallring umschließt und aus dem der Faltenbalg im Übrigen besteht.

Dieses Dichtmaterial liegt dabei dichtend an der Wandung der Aufnahme außerhalb der Nut an.

Diese Ausbildung ermöglicht eine Fertigung sowohl des Faltenbalges wie auch der Aufnahme ohne besondere Fertigungssorgfalt zur Einhaltung von engen Toleranzen, da diese durch die Federschenkel ebenso wie durch das in gewissem Maße komprimierbare Dichtmaterial ausgeglichen werden.

Somit ist die Herstellung des Bremssattels bzw. im Fall des Einsatzes einer Verschlussplatte deren Herstellung gegenüber den bekannten wesentlich preiswerter, was insofern von Bedeutung ist, als Scheibenbremsen als Serienteile in großen Stückzahlen zum Einsatz kommen.

Weitere vorteilhafte Ausbildungen der Erfmdung sind in den Unteransprüchen gekennzeichnet.

Ein Ausführungsbeispiel der Erfindung wird nachfolgend anhand der beigefügten Zeichnungen beschrieben.

Es zeigen:
- Figur 1: einen Teilausschnitt einer erfindungsgemäßen Scheibenbremse in einer geschnittenen Draufsicht
- Figur 2: eine Einzelheit der Scheibenbremse in einer vergrößerten geschnittenen Draufsicht
- Figur 3: einen Teilausschnitt der Darstellung in Figur 2, nochmals vergrößert dargestellt
- Figur 4: eine Draufsicht auf den Faltenbalg, gesehen in Richtung des Pfeiles IV in Figur 2.

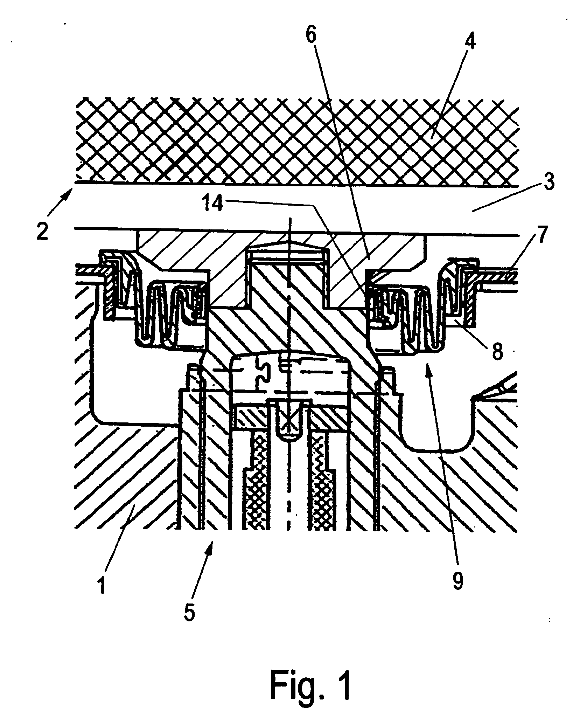

In der Figur 1 ist ein Teil einer Scheibenbremse dargestellt, die einen als Schiebesattel ausgebildeten Bremssattel 1 aufweist, in dem eine Stellspindel 5 gelagert ist, mit der über ein angeschlossenes Druckstück 6 mittels einer nicht gezeigten Zuspanneinrichtung ein Bremsbelag 2 gegen eine ebenfalls nicht dargestellte Bremsscheibe pressbar ist.

Dabei besteht der Bremsbelag 2 aus einer Belagträgerplatte 3 und einem darauf befestigten Reibbelag 4, der die Bremsscheibe im Fall einer Bremsung kontaktiert. Das Druckstück 6, das im Beispiel an die Stellspindel 5 angeschraubt ist, liegt hierbei an der Belagträgerplatte 3 an. Bei anderen Ausführungsformen ist das Druckstück 6 einstückig mit der Belagträgerplatte 3 verbunden, so dass die Stellspindel 5 stirnseitig lose an dem Druckstück 6 anliegt.

Im vorliegenden Ausführungsbeispiel ist der Bremssattel 1 auf seiner dem Bremsbelag 2 zugewandten Seite weitgehend durch eine Verschlussplatte 7 verschlossen, die im Austrittsbereich der Stellspindel 5, eine im Sinne einer Hülse geformte Öffnung 8 bildend, durchbrochen ist.

Zur Abdichtung des Austrittsbereichs der Stellspindel 5 aus dem Bremssattel 1 ist ein in die Öffnung 8 eingesetzter Faltenbalg 9 vorgesehen, der andererseits gegenüber der Stellspindel 5 hermetisch dicht anliegt.

Erfindungsgemäß ist der Faltenbalg 9 bremssattelseitig in axialer Richtung formschlüssig gehalten.

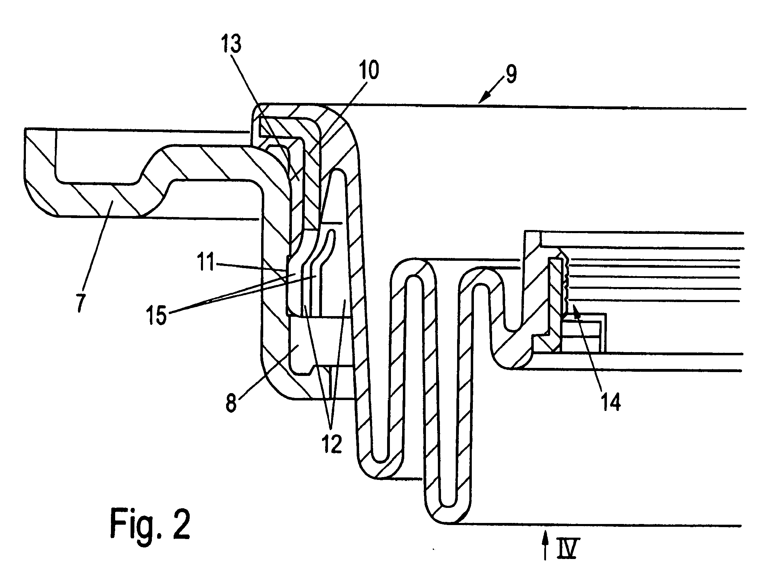

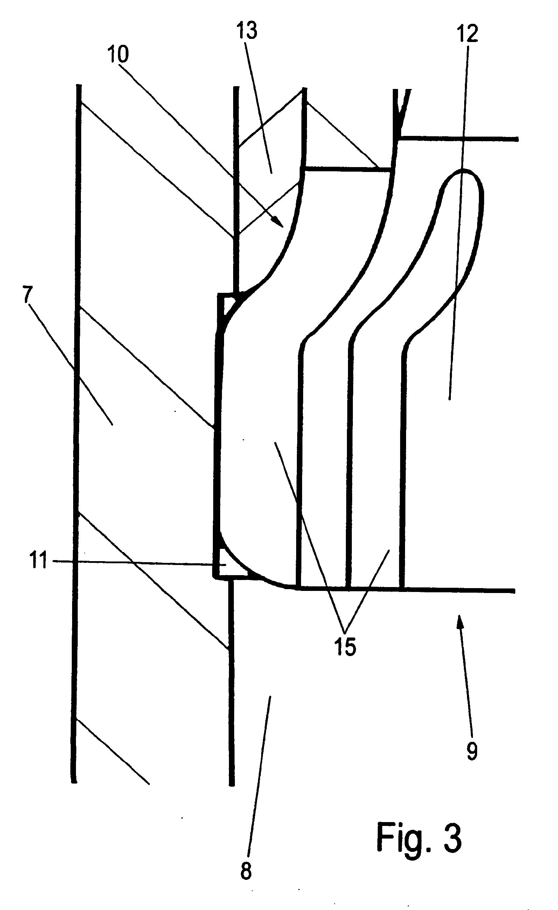

Hierzu weist die Öffnung 8 der Verschlussplatte 7 eine umlaufende Nut 11 auf (Figuren 2 und 3), in der axial ausgerichtete radial auslenkbare Federschenkel 12 einliegen, von denen eine Vielzahl vorzugsweise in gleichen Winkelabständen zueinander angeordnet sind, wobei diese Federschenkel 12 aus einem insbesondere metallischen Ring 10 gebildet sind, der im Übrigen der Versteifung des Randbereiches des Faltenbalges 9 dient und der von einem Dichtmaterial 13 teilweise umhüllt ist, das an der Wandung der Aufnahme 8 dichtend anliegt.

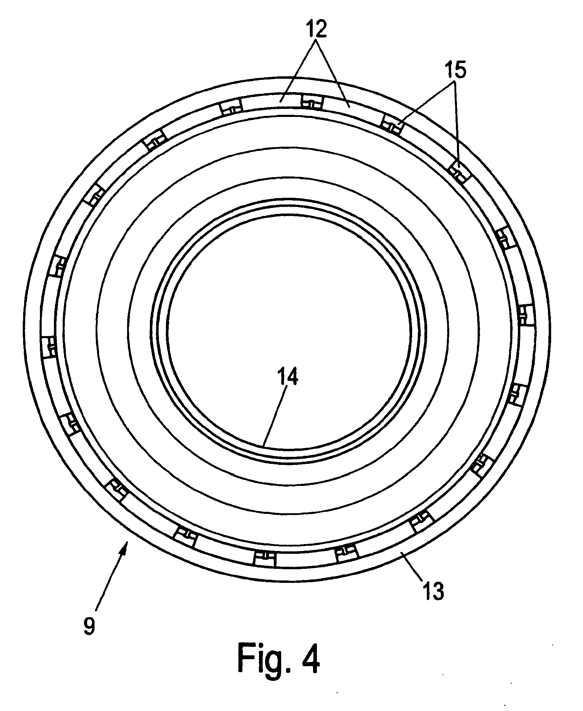

Die Federschenkel 12 sind gebildet durch Ausstanzen von Schlitzen 15, wie dies in der Figur 4 deutlich erkennbar ist. Insbesondere sind mehr als zwölf Federschenkel 12 vorgesehen, vorzugsweise achtzehn.

Zum einen wird mit Hilfe der Federschenkel 12 die Montage des Faltenbalges in der Verschlussplatte 7 vereinfacht, da die Federschenkel 12 zunächst radial nach innen gedrückt werden, bis sie aufgrund ihrer Rückstellkräfte in die Nut 11 einrasten.

Ein innerer Randbereich 14 des Faltenbalges 9 ist so ausgebildet, dass dieser Randbereich 14 eine Verbindung mit der Stellspindel 5 bzw. dem Druckstück 6 bildet, wobei der Randbereicht 14 mit dem anderen Endbereich des Faltenbalges 9 durch mäandrierende Faltungen verbunden ist.

## Patentansprüche

1. Scheibenbremse für ein Nutzfahrzeug, mit einem Bremssattel (1), in dem zwei, in Funktion gegen eine Bremsscheibe pressbare Bremsbeläge (2) angeordnet sind, von denen ein aktionsseitiger mittels einer Zuspanneinrichtung über zumindest eine im Bremssattel (1) gelagerte Stellspindel (5) und ein Druckstück (6) an die Bremsscheibe drückbar ist, wobei zur Abdichtung des Austrittsbereichs der Stellspindel (5) aus dem Bremssattel (1) ein daran direkt oder indirekt in axialer Richtung formschlüssig gehaltener Faltenbalg (9) vorgesehen ist, der andererseits am Druckstück (6) oder der Stellspindel (5) angeschlossen ist, wobei eine einen zugeordneten Randbereich des Faltenbalgs (9) aufnehmende Öffnung (8) des Bremssattels oder einer Verschlussplatte (7) eine umlaufende Nut (11) aufweist? dardurch gekennzeichnet, dass in der Nut (11) eine ringförmige Feder des Faltenbalges (9) mit axial ausgerichteten und radial auslenkbaren Federschenkeln (12) einliegt.

2. Scheibenbremse nach Anspruch 1, **dadurch gekennzeichnet, dass** die Federschenkel (12) in gleichem Winkelabstand zueinander angeordnet sind.

3. Scheibenbremse nach Anspruch 1 oder 2, **dadurch gekennzeichnet, dass** die Federschenkel (12) an einen Ring (10), vorzugsweise aus Metall, angeformt sind, der in ein Dichtmaterial (13) eingebettet ist.

4. Scheibenbremse nach Anspruch 3, **dadurch gekennzeichnet, dass** das Dichtmaterial (13) dichtend an einer Wandung der Aufnahme (8) anliegt.

5. Scheibenbremse nach einem der vorhergehenden Ansprüche, **dadurch gekennzeichnet, dass** die Federschenkel (12) durch Stanzen von Schlitzen (13) in den Ring (10) gebildet sind.

6. Scheibenbremse nach einem der vorhergehenden Ansprüche, **dadurch gekennzeichnet, dass** mehr als zwölf Federschenkel (12) vorgesehen sind, vorzugsweise 18.

## Claims

1. Disc brake for a utility vehicle, having a brake calliper (1), in which two brake pads (2) which can be pressed in functioning against a brake disc are arranged, one of which on the actuating side can be pressed by means of a brake application means via at least one adjusting spindle (5) mounted in the brake calliper (1) and a pressure member (6) against the brake disc, wherein in order to seal the exit region of the adjusting spindle (5) from the brake calliper (1) a bellows (9) held in a shape-locking way thereon directly or indirectly in the axial direction is provided, said bellows (9) being connected on the other hand to the pressure member (6) or the adjusting spindle (5), wherein an opening (8) of the brake calliper (1) or of a closure plate (7) receiving an assigned edge region of the bellows (9) comprises a peripheral groove (11), **characterised in that** a ring-form spring of the bellows (9) with axially orientated and radially deflectable spring legs (12) lies in the groove (11).

2. Disc brake according to claim 1, **characterised in that** the spring legs (12) are arranged at the same angular distance from each other.

3. Disc brake according to claim 1 or 2, **characterised in that** the spring legs (12) are formed on a ring (10), preferably made of metal, which is embedded in a sealing material (13).

4. Disc brake according to claim 3, **characterised in that** the sealing material (13) lies in a sealing manner on a wall of the receiving area (8).

5. Disc brake according to one of the preceding claims, **characterised in that** the spring legs (12) are formed by punching out slots (13) in the ring (10).

6. Disc brake according to one of the preceding claims, **characterised in that** more than twelve spring legs (12) are provided, preferably eighteen.

## Revendications

1. Frein à disque pour un véhicule utilitaire comprenant un étrier (1) de frein, dans lequel sont montées deux garnitures (2) de frein pouvant en fonctionnement être pressées sur un disque de frein dont l'une peut du côté action être poussée sur le disque de frein au moyen d'un dispositif de serrage par l'intermédiaire d'au moins une broche (5) de réglage montée dans l'étrier (1) de frein et d'une pièce (6) d'application d'une pression, dans lequel, pour rendre étanche la zone dans laquelle la broche (5) de réglage sort de l'étrier (1) de frein, il est prévu un soufflet (9) qui est maintenu à complémentarité de forme dans la direction axiale directement ou indirectement et qui est raccordé d'autre part à la pièce (6) d'application d'une pression ou à la broche (5) de réglage, dans lequel une ouverture (8) de l'étrier (1) de frein ou d'une plaque (7) de fermeture recevant une zone marginale associée du soufflet (9) a une rainure (11) faisant le tour, **caractérisé en ce que** dans la rainure (11) est mis un ressort annulaire du soufflet (9) ayant des branches (12) de ressort dirigées axialement et pouvant être déviées radialement.

2. Frein à disque suivant la revendication 1, **caractérisé en ce que** les branches (12) du ressort sont disposées les unes par rapport aux autres à une même distance angulaire.

3. Frein à disque suivant la revendication 1 ou 2, **caractérisé en ce que** les branches (12) du ressort sont formées sur un anneau (10), de préférence en métal, qui est incorporé dans un matériau (13) d'étanchéité.

4. Frein à disque suivant la revendication 3, **caractérisé en ce que** le matériau (13) d'étanchéité s'applique d'une manière étanche à une paroi du logement (8).

5. Frein à disque suivant l'une des revendications précédentes, **caractérisé en ce que** les branches (12) de ressort sont formées par estampage de fente (13) dans l'anneau (10).

6. Frein à disque suivant l'une des revendications précédentes, **caractérisé en ce qu'**il est prévu plus de douze branches (12) de ressort de préférence 18.
